# EUROPEAN PATENT SPECIFICATION

(11) **EP 2 370 332 B1**
(45) Date of publication and mention of the grant of the patent: **07.08.2013**
(21) Application number: 08874942.9
(22) Date of filing: 01.12.2008
(51) Int. Cl.: B65G 65/23, B65F 3/00

(54) **CONTAINER RETAINING ASSEMBLY FOR RETAINING A GARBAGE CONTAINER AND METHOD FOR ITS USE**
BEHÄLTERHALTEANORDNUNG ZUM FESTHALTEN EINES MÜLLBEHÄLTERS UND VERFAHREN ZUR DEREN BENUTZUNG
ENSEMBLE DE MAINTIEN DE CONTENANT POUR MAINTENIR UN CONTENANT À ORDURES ET PROCÉDÉ POUR SA MISE EN OEUVRE

(43) Date of publication of application: 05.10.2011
(73) Proprietor: Proces Service ApS, 4000 Roskilde (DK)
(72) Inventor: HOLM, Tonny Sander, DK-4623 Lille Skensved (DK)
(74) Representative: Trier, Mikkel Roed
(86) International application number: PCT/DK2008/050283
(87) International publication number: WO 2010/063285

(56) References cited:
- EP-A- 1 921 025
- DE-U1- 20 001 624
- FR-A- 2 887 536
- US-A- 5 567 105

## Description

The present invention relates in a first aspect to a container retaining assembly adapted to retain a garbage container. More particularly, the present invention relates to a container retaining assembly adapted to retain a garbage container, particularly a garbage container for special category waste such as hospital waste, clinical waste, chemical waste, confidential waste or biological waste, of the substantially box-shaped type with an upper part, a lower part, said lower part comprising a bottom part defining a bottom plane and said upper part comprising a top part with an opening defining a top plane, the bottom plane and the top plane being substantially parallel, comprising a container booth adapted to accommodate the garbage container in a use position of the container retaining assembly, and at least one retaining device adapted to releaseably retain the garbage container in the container booth.

A container retaining assembly is known from EP 1 921 025 A1 , which discloses the preamble of claims 1 and 12, that describes a device for retaining a single garbage container for domestic garbage with the aim of lifting the container and loading its contents into a renovation vehicle. When lifting and emptying the retained container this assembly is constructed to perform a simultaneous lifting and tilting of the container in such a way as to ensure that the lid of the container opens slightly during the process, thus enabling emptying the container into the renovation vehicle. The actual retaining of the container is performed in that a loading means in the form of two arms grabs an external engagement part of the container being provided on the container's sides for the purpose.

However, in case of a container comprising a lid, when using such a container retaining assembly there resides a high risk of the contents of the container coming into contact with the lid when emptying the retained container, the lid thus getting soiled by the contents of the container. This is particularly unwanted when handling special category waste, such as e.g. hospital waste, that may comprise infected blood, tissue, needles etc., and that may thus pose a risk such as contamination or pollution to the surroundings and/or the operator controlling the container retaining assembly, as the lid is difficult to clean properly and as special cleaning procedures may be necessary to perform such cleaning, e.g. due to waste handling regulations.

Furthermore, particularly when handling relatively heavy containers, as will often be the case when handling special category waste, the known container retaining assembly poses a substantial risk of not being able to maintain the retaining of the container during a lifting process, as the loading means and/or, particularly, the external part of the container grabbed by the loading means may give way under the combined weight of the container and its contents. Furthermore the known container retaining assembly is adapted for only one particular type of container comprising one particular type of external engagement means.

The present invention therefore aims at providing a container retaining assembly adapted for retaining relatively heavy containers, which container retaining assembly is capable of securely retaining a broad range of container configurations during lifting and tilting thereof and provides for easy and simple fixation and release of said containers. Furthermore, the present invention aims at providing a container retaining assembly, which is capable of achieving retention for a higher number of possible orientations of the container in the container retaining assembly, thus providing for an increased degree of freedom in the placing of said container.

According to a first aspect of the invention the above objects are achieved by a container retaining assembly as defined in the introduction comprising a first retaining device with a first movable member and a first backstopping member, the first movable member being movable towards the first backstopping member for providing a first force on the garbage container in the use position, the first force retaining the lower part of the garbage container between the first movable member and the first backstopping member, and a second retaining device with a second movable member and a second backstopping member, the second movable member being movable towards the second backstopping member for providing a second force on the garbage container in the use position, the second force retaining a side of the upper part of the garbage container between the second movable member and the second backstopping member as defined in claim 1.

The container retaining assembly according to the first aspect of the invention provides a considerably more secure and stable retention even of a fairly heavy container. Firstly, the first and second retaining device, respectively, retain the container at each their separate part (i.e. lower part and side of upper part, respectively) of the container, thereby distributing the combined retention force of the container retaining assembly over a larger surface area of the container, thus providing for a retention implying a significantly reduced risk of failure of the parts of the container contacting the first and second retaining devices. Secondly, the provision of particularly the first and second backstopping members, respectively, provide for a significantly improved retention with respect to stability, in that the container during retention is held firmly between the movable member and the backstopping member of the first and second retaining devices, respectively. Furthermore, engagement means on the container's sides being specially adapted to be grabbed by the retaining means may be omitted, thus further lowering the risk of failure of the container during retention and enabling an increased degree of freedom in choice of container configuration and in orientating a container when placing it in the container retaining assembly.

According to a preferred embodiment, the first movable member comprises at least one first actuator element providing the first force and at least one first force-transferring element adapted for transferring the first force to the lower part of the garbage container, and the first actuator element provides the first force as an upwardly inclined force, and the first force-transferring element is adapted for transforming the first force to a force directed in a direction being substantially parallel with the bottom plane of the garbage container.

Such a configuration provides for a particularly efficient force transfer to and thereby retention of the lower part of the container, the container beforehand being pushed sidewards until contact with the first backstopping member. Furthermore, such a configuration allows for a particularly space saving movable member, thus allowing for the possibilities of placing more container booths side-by-side and close to each other. Simultaneously a high degree of freedom is maintained regarding the exact position in which the movable member is mounted and thereby the exact position on the container in which the force is transferred and the magnitude of the actually transferred force, thus providing a container retaining assembly being suitable for a larger number of different container configurations.

According to another preferred embodiment, the second movable member comprises at least one second actuator element providing the second force and at least one second force-transferring element adapted for transferring the second force to the side of the upper part of the garbage container, and the second actuator element provides the second force as a force directed substantially perpendicular to said bottom plane of said container, and the second force-transferring element is adapted for transforming the second force to a force directed in a direction being substantially perpendicular to the bottom plane of the garbage container.

Such a configuration provides for a particularly efficient force transfer to and thereby retention of a side of the upper part, more specifically a protruding upper edge or flange, of the container whereby the flange is brought into contact with the second backstopping member. Thereby a protruding upper edge or flange, which is a common part of most ordinary container configurations may be retained, thus enabling omitting any engagement means on the container's sides being specifically adapted for retaining purposes.

According to a further preferred embodiment, the second force-transferring element comprises a substantially square bracket-shaped main element and at least one abutment element, providing for a particularly efficient configuration of the second force transferring element, both regarding pushing the flange or edge upwards and retaining it against the second backstopping member.

According to further preferred embodiments, the container booth is adapted for accommodating a garbage container which is loaded into the container booth in a loading direction, and the container booth comprises a depth being parallel with the loading direction and a width being perpendicular to the loading direction, and the first force-transferring element and/or the second force-transferring element extends in substantially the full depth of said container booth. Thereby a particularly advantageous force distribution over a large surface area of the container, and thus stability in retention, is provided.

According to a particularly preferred embodiment, the container retaining assembly comprises at least one set of container booth side elements, such as rigid bars, comprising a first side element, a second side element extending substantially parallel with said first side element, and a third side element rigidly connecting said first and second side elements and extending substantially perpendicular to said first and second side elements, and wherein said first movable member and said first backstopping member are arranged on said first and second side elements, respectively, and said second movable member and said second backstopping member are arranged on said second side element, such that said first force and said second force is provided in substantially mutually perpendicular directions.

Thereby a container retaining assembly with a robust container booth having a well defined size and geometry, thus being particularly well suited for accommodating a container of the type mentioned above, may be provided. Furthermore a container retaining assembly enabling a particularly simple configuration with a particularly high structural stability is provided in which the first and second retaining devices may be mounted directly on and held rigidly with respect to each other by the first and second side elements in a suitable manner, such as e.g. by bolting, welding or hinge connection.

According to a further preferred embodiment, the container retaining assembly further comprises one or more further side elements being substantially parallel with the third side element, thereby providing for a container retaining assembly having a further improved structural stability.

According to a particularly preferred embodiment, the depth of the container booth is larger than the width of the container booth, thereby providing for a container retaining assembly that when placed in a side-by-side arrangement with other container booths takes up a particularly small amount of space.

According to another preferred embodiment, the container retaining assembly further comprises a screening plate arranged substantially vertically above the first movable member and extending substantially in parallel with said depth of said container booth. A retaining device comprising such a screening plate provides for several advantages. Primarily, in case of a container comprising a lid, it may be avoided that the lid and the container retaining assembly get caught in each other. Furthermore a screening towards the surroundings of the container booth may be obtained. Such a screening is particularly advantageous in case of the possibility mentioned below of having several container booths arranged side by side, in that the screening plate in this case may provide a screening between the container, and particularly its lid, accommodated in one container booth and the second retaining device of a neighbouring container booth.

According to another preferred embodiment, the container retaining assembly further comprises a tilting means adapted for tilting the container retaining assembly about a tilting axis, thereby providing for a container retaining assembly capable of emptying the container.

According to a particularly preferred development of this embodiment, the tilting means is capable of tilting the container retaining assembly between 90° and 180°, preferably between 120° and 160°, most preferred around 140°, thus providing for a container retaining assembly with a particularly efficient emptying process, even for container contents being sticky, such as e.g. blood, tissue or the like.

According to another preferred embodiment, the container retaining assembly further comprises a lifting means adapted for lifting the container retaining assembly in a lifting direction being substantially perpendicular to the bottom plane of the garbage container, the lifting means preferably being arranged in connection with the tilting means. Thereby a container retaining assembly is provided with which the container may be tilted and thereby emptied without undesired contact with a surface underlying the container retaining assembly and with which the container may be emptied into a receptacle with an opening situated at a different, particularly higher, height than the opening of the container.

According to another preferred embodiment, the container retaining assembly further comprises transporting means adapted for moving the container retaining assembly in a transporting direction being substantially parallel to the bottom plane of the garbage container, the transporting means preferably being arranged in connection with the lifting means and/or the tilting means, thereby providing for a container retaining assembly capable of moving the container from one place to another. Such a container retaining assembly is particularly beneficial in case it is desired to empty a container retained by the container retaining assembly into a receptacle located at another place than the starting point of the container. An example of such a case could be when full containers are received at a receiving station of a garbage handling facility, whereupon it desired to empty the containers into e.g. a garbage incinerator located at another place in the garbage handling facility.

According to another particularly preferred embodiment, the container retaining assembly comprises a plurality of, preferably three, container booths arranged in a side-by-side configuration. Such a configuration provides for a container retaining assembly capable of retaining and possibly further handling more than one container simultaneously, and thus being considerably more efficient in capacity, as each container booth may accommodate one container.

According to another preferred embodiment, the container retaining assembly is adapted for accommodating a garbage container further comprising a first side surface and an opposite, second side surface, the second side surface comprising at an upper edge engagement means, said second movable member being adapted for engagement with said upper edge engagement means, the garbage container preferably further comprising a lid hingedly connected with an upper edge of the first side surface, such that, when the garbage container is placed in the container booth, the lid in an open position of the garbage container may be arranged to be retained in a position parallel with the first side element. Such a garbage container is in a particularly preferred embodiment a garbage container in accordance with the EN 840-2-standard.

Thereby a container retaining assembly is provided that is capable of handling commonly used garbage containers with a hinged lid in such a way that during retention the lid is always kept away from the opening of the container, particularly by being held between the container and the side element, thus substantially avoiding contact between the lid and the contents of the container, particularly when emptying the container. Furthermore, a container retaining assembly hereby is provided with which a lid of the container during retention may be kept in a position out of the way, such as to avoid the lid becoming soiled when emptying the container. With such a container retaining assembly it is furthermore possible to clean the container itself directly after emptying while the container is still retained, without having to clean the lid.

According to a second aspect of the invention a container retaining installation comprising a plurality of container retaining assemblies according to the invention, preferably arranged in a side by side configuration, is provided, thereby providing a container retaining installation capable of an even higher capacity, as an even higher number of containers may be handled simultaneously.

In a particularly preferred embodiment of such a container retaining installation the lifting means is adapted to simultaneously lift the two or more container retaining assemblies, and the tilting means are adapted to allow for separate tilting of each of the two or more container retaining assemblies, thus providing the possibility of emptying the containers of each container retaining assembly into separate receptacles, such a feature being beneficial e.g. in case of a receptacle being at almost full capacity.

According to a third aspect of the invention, and as defined in claims 20 to 24, a method for retaining a container is provided, the method employing at least one container retaining assembly according to the invention.

The invention will now be described in further detail based on non-limiting exemplary embodiments, and with reference to the drawings. In the drawings,
fig. 1 shows a schematic side view of an ordinary garbage container,
fig. 2 shows a side view of a first embodiment of the container retaining assembly according to the first aspect of the invention comprising one container booth and accommodating a garbage container according to fig. 1,
fig. 3 shows a side view of a second embodiment of a container retaining assembly according to the first aspect of the invention comprising three container booths, each similar to that of fig. 2,
fig. 4 shows a perspective photograph of a container retaining assembly according to fig. 3,
fig. 5 shows a top view of the container retaining assembly according to fig. 3,
fig. 6 shows an end view of a container retaining assembly according to fig. 3 in an initial position,
fig. 7 shows an end view corresponding to that of fig. 6 in a position in which the container retaining assembly has been tilted 140° about a horizontal axis,
fig. 8 shows a side view of a container retaining installation according to the second aspect of the invention comprising two container retaining assemblies according to fig. 3, and
figs. 9a - 9d show four steps of an embodiment of the method for retaining a container according to the third aspect of the invention.

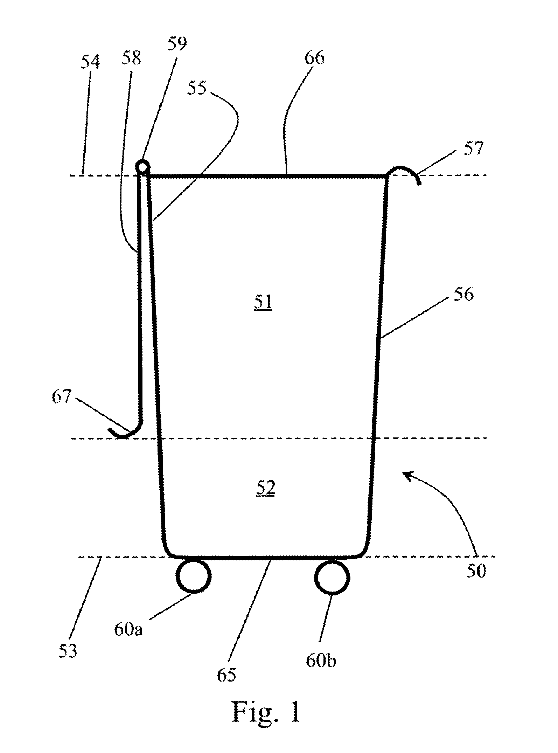

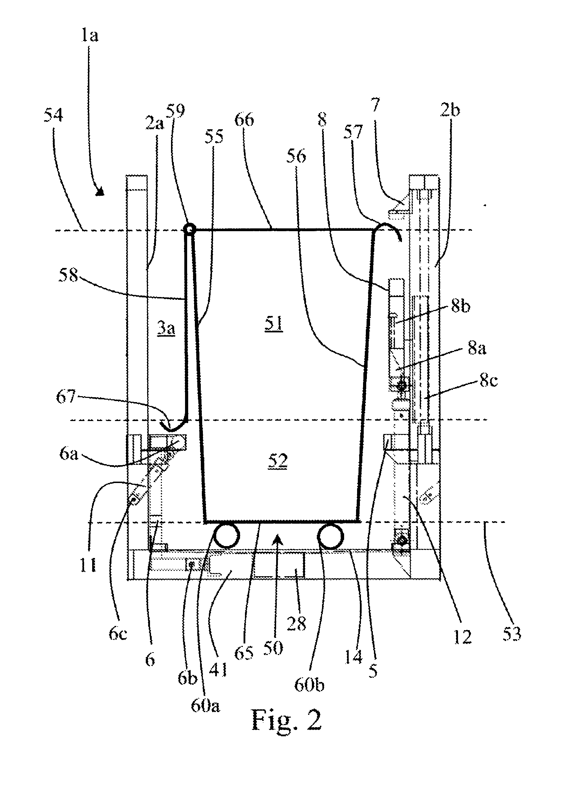

Fig. 1 shows a generalized, schematic cross-sectional view of an example of an ordinary garbage container 50 which the container retaining assemblies according to the exemplary embodiments described below and shown in figs. 2 to 8 are adapted to retain. The garbage container 50 is substantially box-shaped and comprises an upper part 51 and a lower part 52. The lower part 52 comprises a bottom part 65 defining a bottom plane 53, the bottom part 65 forming a closed bottom of the garbage container 50. The upper part 51 comprises a top part 66 with an opening, the sides of which define a top plane 54, the top part 66 forming an open top of the garbage container 50.

The garbage container 50 further comprises a first side surface 55 and an opposite second side surface 56. The first side surface 55 and the second side surface 56 need not be parallel, but may be slightly inclined with respect to each other as indicated in fig. 1. Furthermore the corners where the first side surface 55 and the second side surface 56, respectively, join the bottom part 65 may be rounded as likewise indicated in fig. 1. The second side surface 56 of the garbage container 50 comprises at an upper edge engagement means suitable for engagement with the second movable member of the container booth. Such engagement means may be any suitable engagement means, but are in the present case an edge 57 that generally is provided on regular garbage containers. The edge 57 is a curved outwardly protruding edge 57 or flange that extends along the outer circumference of the top part 66 at the second side surface 56 and possibly also at the edges connecting the second side surface 56 and the first side surface 55. Furthermore the garbage container 50 comprises a lid 58 adapted for covering the opening of the top part 66 and connected by means of a hinge connection 59 with an upper edge of the first side surface 55. The lid 58 further comprises a correspondingly shaped edge 67 adapted for engaging the corresponding edge 57 when the lid 58 is brought to cover the top part 66 of the garbage container 50. Also, the garbage container 50 may comprise wheels 60a, 60b.

The container booths of the container retaining assemblies of the drawings are adapted for accommodating a container of the type of fig. 1 being in accordance with the EN 840-2-standard and having a volume of about 660 L.

Fig. 2 shows a first embodiment of a container retaining assembly 1a according to the first aspect of the present invention with a container booth 3a adapted for accommodating the garbage container 50 described above with reference to fig. 1. In fig. 2 the garbage container 50 is shown in an inserted, not yet retained position. The container booth 3a comprises in the embodiment shown a first retaining device comprising a first movable member and a first backstopping member 5, the first movable member consisting of a first actuator element 11 and a first force transferring element 6, and a second retaining device with a second movable member and a second backstopping member 7, the second movable member consisting of a second actuator element 12 and a second force transferring element 8. In the following the first movable member is thus assigned the reference numeral combination "6, 11", and the second movable member is likewise assigned the reference numeral combination "8, 12".

The container booth 3a of the container retaining assembly 1a as shown in fig. 2 furthermore comprises a first side element 2a shown extending vertically, a second side element 2b being parallel with the first side element 2a and thus likewise extending vertically and a third side (or bottom) element 41 being perpendicular to the first and second side elements 2a, 2b and thus extending horizontally. The side elements 2a, 2b, 41 are rigidly connected to each other. The side elements are in the form of rigid, durable elements, such as bars, rods, plates or the like made of e.g. steel, iron, stainless steel or the like, that may be reinforced. Furthermore the horizontal third side element 41 comprises a top element 14, such as a separate plate or grating, suitable for providing a bottom support for receiving a bottom surface of a container to be accommodated in the container booth 3a. The top element 14 comprises a depression 28 provided for collecting any fluids leaking from the garbage container 50 or otherwise gathering in the container booth 3a.

In the embodiment shown the first movable member 6, 11 is mounted on a bottom part of the first side element 2a, whereas the first backstopping member 5 is mounted on a bottom part of the second side element 2b. Also, both the second movable member 8, 12 and the second backstopping member 7 are mounted on the second side element 2b, the second actuator element 12 being mounted on a bottom part thereof, the second force transferring element 8 being mounted on a middle part thereof and the second backstopping member 7 being mounted on an upper part thereof. Thereby, the first movable member 6, 11 is movable in a substantially horizontal direction towards the first backstopping member 5, the first backstopping member 5 and first movable member 6, 11 being mounted such as to provide a first horizontal force on a garbage container 50 placed in the container booth 3a such that the first horizontal force retains a lower part 52 of the garbage container 50 between them. Likewise the second movable member 8, 12 is movable in a substantially vertical direction towards the second backstopping member 7, the second members 7 and 8, 12 being mounted such as to provide a second vertical force on the garbage container 50 placed in the container booth 3a such that the second vertical force retains a side 56 of an upper part 51 of the garbage container 50 between them.

When the garbage container 50 comprising a lid 58 is placed in the container booth 3a (cf. fig. 2), the lid 58 may, in an open position of the garbage container 50, be arranged in a position parallel with the first side element 2a, such as to be loosely retained between the first side element 2a and the first side surface 55 of the garbage container 50 as shown in fig. 2. Simultaneously, the second side surface 56 is placed in a position substantially parallel with and next to the second side element 2b such that the engagement means 57 at the upper edge of the second side surface 56 is placed in a height between the second backstopping member 7 and the second movable member 8, 12.

As an alternative the first retaining device may be placed such that it retains not only the container as such but also the lid, i.e. the first movable member 6, 11 may be placed such as to provide a force on the lid of the container and through the lid on a lower part of the container.

With the above configuration the first force exerted by the first retaining device will have the added beneficial effect of displacing a container placed in the container booth 3a slightly towards the second movable member 8, 12, thus contributing to placing the container in a position suitable for optimizing the retention effect of the second retaining device. This effect arises from the fact that with the above configuration the first movable member 6, 11 is moved towards the second movable member 8, 12.

As can be seen from fig. 2 the first and second actuator elements 11 and 12, respectively, are provided to actuate the movement of the first and second movable members, respectively. Such actuators may be any suitable actuator types, but are in the present case pivotally suspended hydraulic actuators. The precise function of the container retaining assembly 1a, and thus the actuators, will be described below with reference to an embodiment of the method according to the third aspect of the invention.

Referring to fig. 2 the first force transferring element 6 comprises in the embodiment shown a first pivot joint 6a connecting it to the first actuator element 11 and a second pivot joint 6b connecting it to the third side element 41. Furthermore the first actuator element 11 is connected to the first side element 2a by a third pivot joint 6c provided at a lower position than the first pivot joint 6a. Thus when the first actuator element 11 is extended inclined upwards, the second pivot joint 6b and the third pivot joint 6c ensure that the force transferring element 6 tilts moving the section at the first pivot joint 6a substantially horizontally towards the first backstopping member 5. The first force transferring element 6 is shown having a substantially C-shaped cross-section, whereby the use of a longer first actuator element 11 is enabled, which in turn provides for the possibility of providing a larger first force. However the precise shape of the first force transferring element 6 remains uncritical as long as it is suitable for performing the above described movement. For instance the first movable member could be constructed of an actuator element extending horizontally from the first side element 2a and possibly having a force transferring element at one end thereof. Compared with the embodiment shown in fig. 2 such a construction would, however, leave space for a smaller actuator element only, and thereby provide for application of a somewhat smaller first force.

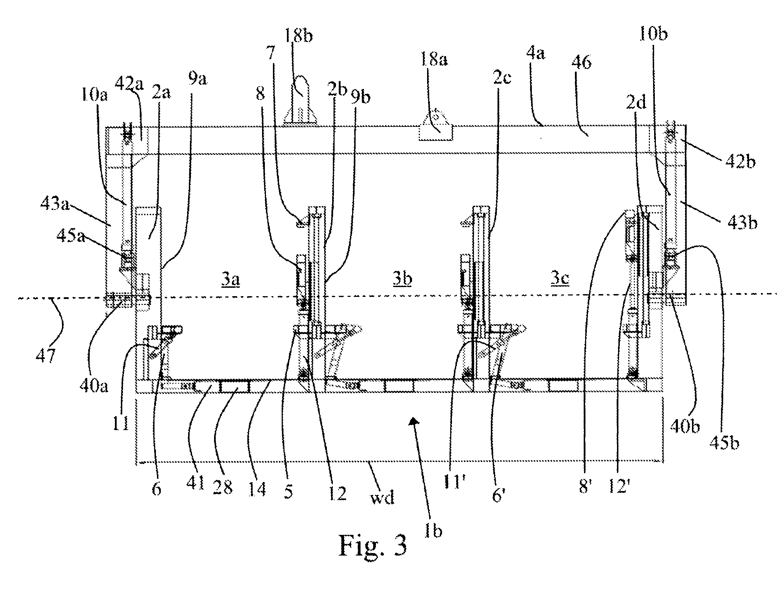

Turning to fig. 3 to 7 there is shown a second embodiment of a container retaining assembly 1b according to the invention comprising three container booths 3a, 3b, 3c each being similar to the container booth 3a shown in fig. 2. As can be seen the container booths 3a, 3b, 3c are placed in a side-by-side configuration such that the two vertical side elements 2b and 2c placed centrally in the container retaining assembly 1b are shared between two neighbouring container booths. In other words, the container retaining assembly 1b comprises a total of four vertical side elements 2a, 2b, 2c and 2d.

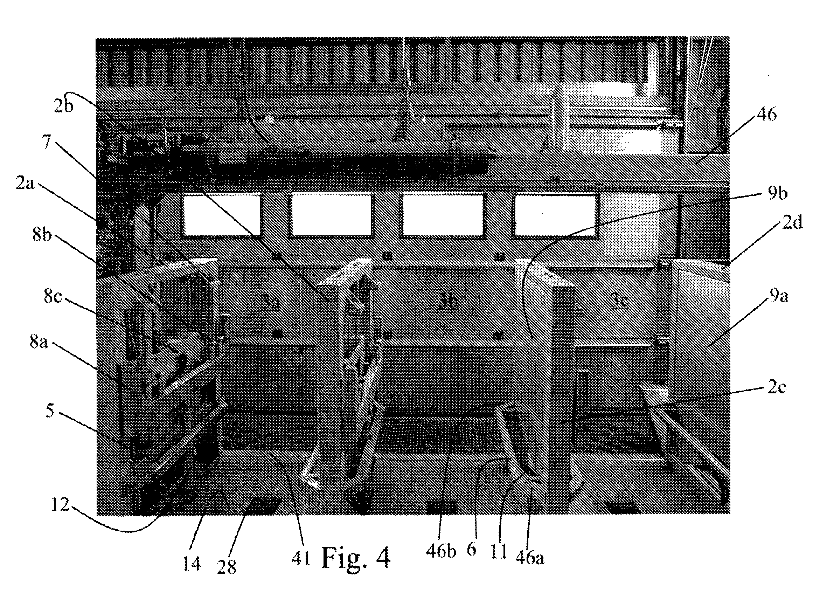

Referring to fig. 2 and to the perspective photograph of the second embodiment of the container retaining assembly according to the invention shown in fig. 4 the second force transferring element 8 comprises in the embodiment shown in figs. 2 to 7 at least one abutment element 8b (shown with a dashed line in fig. 2, and fig. 4 featuring four abutment elements) connected to a main element 8a being substantially U-shaped, cf. fig. 4. The second force transferring element 8 furthermore comprises a supporting member 8c that is connected to the second side element 2b and during movement of the second movable member slides along the second side element 2b. If such a supporting member 8c is provided, the main element 8a of the second force transferring element 8 need not be connected directly to the side element 2b, but may be connected solely to the supporting member 8c. The described preferred embodiment notwithstanding, the exact shape of the main element 8a, abutment element 8b and supporting member 8c in principle remain uncritical.

The movement of the movable members 6, 11 and 8, 12, respectively, is illustrated stepwise in the container booths 3a, 3b, 3c shown in fig. 3. In container booth 3a the first movable member 6, 11 and second movable member 8, 12 are shown in their respective retracted positions allowing for loading or unloading a container into or from the container booth 3a. In container booth 3b the first movable member 6, 11 has been moved to its extended position shown, and in container booth 3c both the first movable member 6, 11 and the second movable member 8, 12 have been moved to their respective extended positions such that a container (not shown in fig. 3) is fully retained in the container booth 3c.

On one side of each centrally placed side element 2b, 2c the first backstopping member 5, the second movable member 8, 12 and the second backstopping member 7 of one container booth (e.g. container booth 3a) are mounted, whereas on the opposite side of the same side element 2b, 2c the first movable member 6, 11 of the neighbouring container booth (e.g. container booth 3b) is mounted. In the embodiment shown the side element 2b further comprises a screening plate 9b that here primarily serves the purpose of protecting the second movable member 8, 12 of one container booth 3a from a container, and particularly the lid of the container, accommodated in the neighbouring container booth 3b. Such a screening plate 9b is better shown in fig. 4, where it is mounted on the side element 2c. The screening plate 9b is mounted above the first movable member 6, 11 such as to cover substantially all of the surface part of the side element 2b extending above the first movable member 6, 11. The screening plate 9b may be made of any suitable, durable material, and is e.g. made of a metal such as steel or aluminium, and may in other embodiments cover only a part of the abovementioned surface part of a side element on which it is mounted.

Furthermore fig. 3 shows the container retaining assembly 1b being provided with a tilting means 4a for tilting the container retaining assembly 1b, and thereby any containers retained in the container retaining assembly 1b. In the embodiment shown the tilting means 4a comprises a horizontal beam 46 that at each end is connected with a vertical beam 43a and 43b, respectively, and an actuator 10a and 10b, respectively, the connection possibly being reinforced by means of a suitable bracket 42a, 42b. At an end opposite the horizontal beam 46, each vertical beam 43a, 43b is connected by means of a pivot connection 40a, 40b, respectively, with the corresponding outer vertical side element 2a, 2d, preferably at an outward facing surface thereof. Likewise at an end opposite the horizontal beam 46, each actuator 10a, 10b is connected by means of a pivot connection 45a, 45b with the corresponding outer vertical side element 2a, 2d, preferably at an outward facing surface thereof. Thus the horizontal beam 46 has a length sufficient for covering at least a total width wd of the container retaining assembly 1b. In the embodiment shown the tilting means 4a is adapted for tilting the container retaining assembly 1b about a tilting axis 47 parallel with the horizontal beam 46 of the tilting means 4a, i.e. parallel with the width dimension denoted by wd in fig. 3 of the container retaining assembly 1b. The actuators 10a, 10b actuating the tilting motion may be any suitable actuators but are in the present case hydraulic. When tilting the container retaining assembly 1b the depression 28 in the top element 14 in container booth 3a will be emptied of any fluids collected therein.

The outer first side element 2a comprises a further screening plate 9a on a side opposite the connection with the tilting means 4a. Here the screening plate 9a primarily serves the purpose of protecting the pivot connections 40a and 45a from a container, and particularly the lid of such a container, accommodated in the adjacent container booth 3a. The screening plate 9a is better shown in fig. 4, where it is mounted on the side element 2d. The screening plate 9a is mounted in the same manner and is of the same type as the above described screening plate 9b.

Furthermore the container retaining assembly 1b comprises lifting means (not shown) adapted for vertically lifting the container retaining assembly 1b. The lifting means is preferably provided in connection with the tilting means 4a, in the embodiments illustrated in the figures by being connected to one or more coupling elements such as brackets or fittings 18a and 18b shown in fig. 3, and is adapted for lifting the container retaining assembly 1b including tilting means 4a. The lifting means may take the form of any suitable lifting means such as for instance a suitable hydraulic, pneumatic or electric construction such as an electromotor or a combination thereof, e.g. a crane construction.

The container retaining assembly 1b may also comprise transporting means (not shown) for transporting the container retaining assembly 1b, preferably including tilting means 4a, in a horizontal direction or plane. The transporting means is preferably provided in connection with either the tilting means 4a (e.g. connected to one or more coupling elements such as brackets or fittings 18a and 18b of fig. 3) or the lifting means. For instance the transporting means may be provided as means enabling the container retaining assembly 1b to be transported on a suitable system of tracks (e.g. wheels that may be combined with corresponding rails, and that may be electrically driven). The transporting means may be combined with the lifting means in a suitable crane construction such as a crane with a crane track or a gantry.

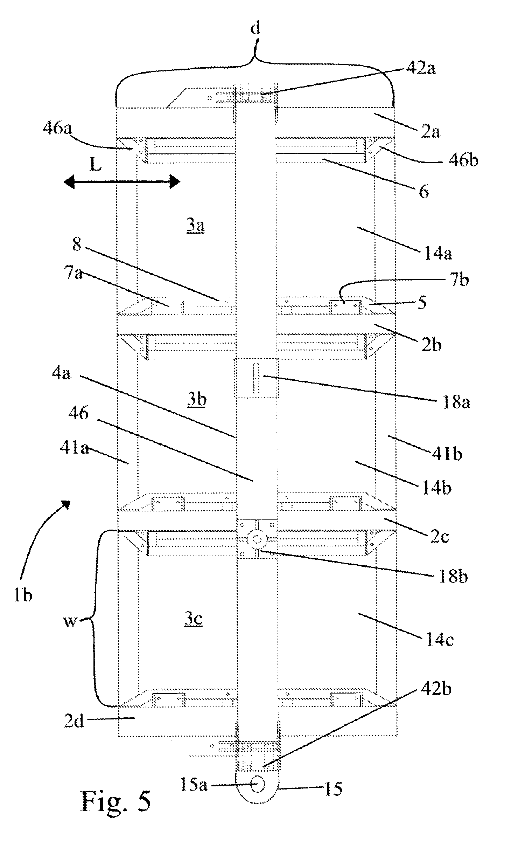

Fig. 5 shows the container retaining assembly 1b according to fig. 3 from above. Each container booth 3a, 3b, 3c comprises a loading direction illustrated by the double-headed arrow L indicating the direction in which a container is loaded into (and later unloaded from) the container booths 3a, 3b, 3c of the container retaining assembly 1b. Furthermore each container booth 3a, 3b, 3c comprises a depth d being defined as its dimension in a direction parallel with the loading direction L and a width w being defined as its dimension in a direction perpendicular to the loading direction L and hence to the depth d. Preferably, but not necessarily, the depth d is of a size being larger than that of the width w. Such a configuration provides for a particularly space efficient way of accommodating box shaped containers of the type described above in container booths, and particularly in a container retaining assembly comprising more than one container booth. In the embodiment shown in figs. 3 to 5 the container retaining assembly 1b has a total width wd of about 320 cm, and each container booth 3a, 3b, 3c has a width w being about 107 cm and a depth d of about 140 cm, the height of each container booth 3a, 3b, 3c, i.e. the dimension being perpendicular to both the width w and the depth d, also being about 140 cm.

In fig. 5 the first and second force transferring elements 6 and 8 as well as the first backstopping member 5 can be seen to extend over substantially the total depth d of the container booth 3a, 3b, 3c such as to enable a force exerted by the force transferring elements 6 and 8 to be transferred to the container over a larger area of the part of the container on which they respectively act.

Furthermore, the first force transferring element 6 is provided with inclined end sections 46a, 46b serving the dual purpose of protecting the first force transferring element 6 and guiding a container being loaded into the container booth 3a, 3b, 3c. The inclined end sections 46a, 46b are preferably non-movable. The first backstopping member 5 may be provided with similar inclined end sections likewise providing a guiding function.

The second backstopping member 7 comprises two separate parts 7a, 7b, but may also comprise more than two such parts or alternatively be one part extending over substantially the entire depth d of the container booths 3a, 3b, 3c.

Also, the vertical side elements 2a, 2b, 2c, 2d extend over the entire depth d of the container booths 3a, 3b, 3c.

Each container booth 3a, 3b, 3c may comprise one or two openable ports (not shown), such a port extending over at least a part of the distance between two neighbouring side elements 2a, 2b, 2c, 2d and substantially vertically from or above one of the third side elements 41a, 41b shown in fig. 5. The port extends in at least a part of the height of the side elements 2a, 2b, 2c, 2d, and serves to prevent a container accommodated in the container booth 3a, 3b, 3c from falling out of the container booth 3a, 3b, 3c, particularly in the initial phase until retention has been achieved.

Referring to fig. 5 the container retaining assembly 1b is furthermore provided with a plate 15 comprising a preferably substantially circular hole 15a. In connection with the plate 15 there is provided an optical, preferably infrared, transmitter (not shown) and an optical, preferably infrared, receiver (likewise not shown). The transmitter and the receiver are placed on opposite sides of the plate 15 in such a way that the optical signal transmitted by the transmitter is transmitted substantially through the centre of the hole 15a and received substantially centrally on the receiving element of the receiver when the container retaining assembly 1b is at rest. In this way this arrangement serves as a security means for monitoring the sideways oscillations of the container retaining assembly 1b during the action of a lifting means for vertically lifting the container retaining assembly 1b. Thus, if the container retaining assembly 1b oscillates too vigorously, the plate 15 will disrupt the optical path preventing the optical signal from reaching the receiver, which in turn may be set to trigger an emergency stop disrupting the lifting action of the lifting means. Preferably the hole 15a has a diameter allowing oscillations of up to about +/- 100 mm in a direction parallel with the depth d of the container booth 3a, 3b, 3c and with respect to the container assembly 1b being at rest, i.e. a diameter of about 200 mm.

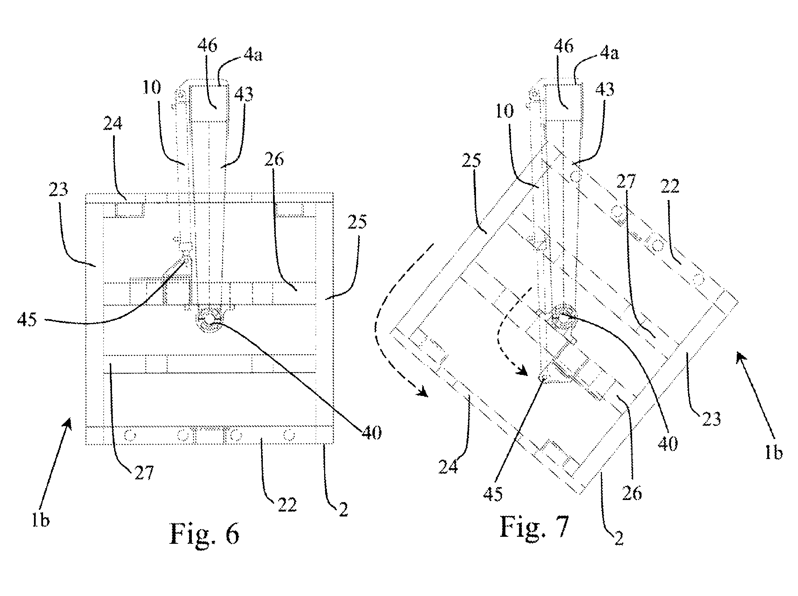

Turning to figs. 6 and 7 featuring two end views of the container retaining assembly 1b according to figs. 3 to 5, the tilting operation of the tilting means 4a is illustrated. In fig. 6 an outer vertical side element 2 is shown in an initial position connected to a tilting means 4a. As can be seen the side element 2 is in the embodiment shown constructed of a set of rigid bars comprising a bottom bar 22, a top bar 24, two vertical side bars 23 and 25 and two horizontal intermediate bars 26 and 27. The actuator 10 and the vertical beam 43 of the tilting means 4a is connected to the intermediate bar 26 in such a way as to place the pivot connection 40 between bar 26 and beam 43 at the centre of the side element 2, and the pivot connection 45 between actuator 10 and bar 26 axially displaced with respect to the pivot connection 40.

In fig. 7 the container retaining assembly 1b has been tilted 140° in a direction shown by dashed arrows in fig. 7 and about the tilting axis 47 shown in fig. 3. The tilting motion is performed by extending the actuator 10 gradually to its fully extended position, whereby the pivot connection 45 is displaced along a circle section in a constant axial distance from the pivot connection 40 to the position shown in fig. 7.

However, tilting less than 140°, such as 90° or 120°, is also feasible. In other embodiments other feasible constructions of the tilting means including different mutual arrangement of vertical beam 43 and actuator 10 may furthermore enable tilting more than 140°, such as 180°.

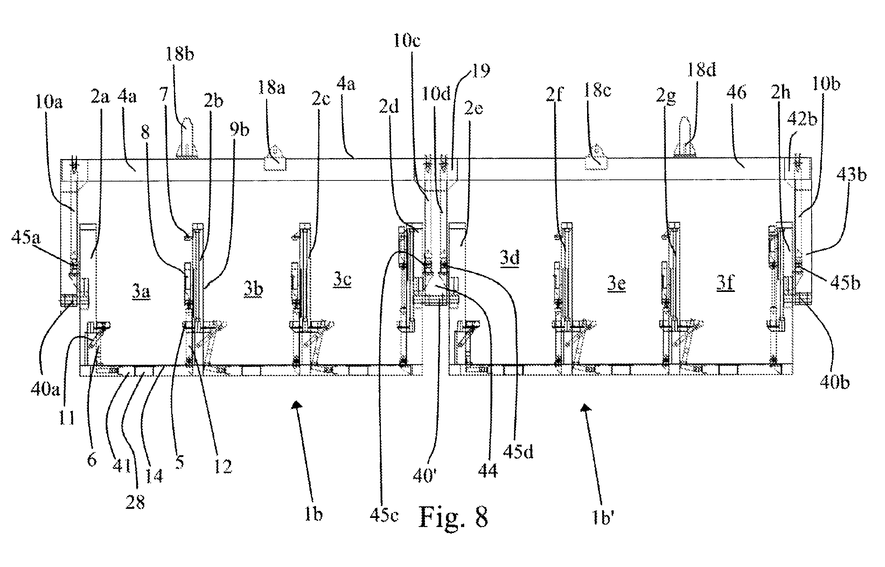

Fig. 8 illustrates an embodiment of a container retaining installation according to the second aspect of the invention. The container retaining installation shown comprises two container retaining assemblies 1b and 1b' according to fig. 2, each comprising three container booths 3a, 3b, 3c and 3d, 3e, 3f, respectively. As can be seen the container retaining assemblies 1b and 1b' are connected to form the container retaining installation by means of the tilting means 4a. Thereby it is rendered possible to tilt each container retaining assembly 1b or 1b' separately. This may be desired e.g. due to a relatively small receiving receptacle at the destination, or if it is desired to empty containers retained in different container retaining assemblies into different receptacles. This may be the case e.g. when the receptacles are garbage incinerators, that it is desired to refill continuously.

In practice the possibility of separate tilting is in the embodiment shown achieved by connecting the container retaining assemblies 1b and 1b' by providing one common vertical beam 44 connected to the adjacent side elements 2d and 2e by the use of a common pivot connection 40', and two actuator elements 10c, 10d, one being connected to the side element 2d by a pivot connection 45c, the other being connected to the side element 2e by another pivot connection 45d. The connection between actuator elements 10c and 10d and the horizontal beam 46 of the tilting means 4a may be reinforced by the use of a suitable bracket 19. In the embodiment according to fig. 8 using two container retaining assemblies 1b and 1b' with dimensions as described in connection with figs. 2 and 4 above the horizontal beam 46 spans over about 700 cm.

In principle other embodiments of the tilting means 4a are feasible. For instance the horizontal beam 46 may be replaced by two separate beams connected at the area of the bracket 19 shown in fig. 8. Also, the vertical beam 44 may be replaced by to separate beams connected mutually or by means of the horizontal beam 46 and/or bracket 19. Likewise the pivot connection 40' may be replaced by two pivot connections, each connecting the vertical beam 44 or beams to a side element 2d and 2e, respectively.

Furthermore, container retaining installations according to the invention comprising another number of container retaining assemblies than two (e.g. three or four) are of course feasible.

As mentioned previously, the movable parts (i.e. at least the first and second movable members 6, 11 and 8, 12 and the tilting means 4a) of the container retaining assemblies shown in figs. 2 to 7 are actuated by means of hydraulic actuators. Other feasible actuator types include for instance pneumatic or mechanic actuators. Thus, the container retaining assembly according to the invention preferably also comprises supply means (not shown) in the form of e.g. a reservoir and connecting pipes or the like adapted for supplying a substance to the actuators, i.e. hydraulic oil for hydraulic actuators, pressurized air for pneumatic actuators etc.

Furthermore the container retaining assembly and container retaining installation according to the invention preferably comprises a control means (not shown) for controlling and/or monitoring the functionality of the container retaining assembly. Such a control means may comprise components such as an electrical system comprising electrical connections, means for controlling and monitoring relevant components of the container retaining assembly, such as the hydraulic system, the actuator elements, the tilting means, the lifting means and the transporting means, and a control unit providing for manual or automatic control and/or monitoring of the functionality of the container retaining assembly. A suitable control unit preferably comprises elements such as e.g. a display, control buttons, a storage facility for storing e.g. operating data, a safety device for emergency shutdown of the container retaining assembly and means for indicating the status of the container retaining assembly and/or relevant components thereof, e.g. in case of failure. The control unit may furthermore be adapted for remotely controlling the electrical system, for instance by the use of radio transmission. Thereby the container retaining assembly may be operated from a safe distance.

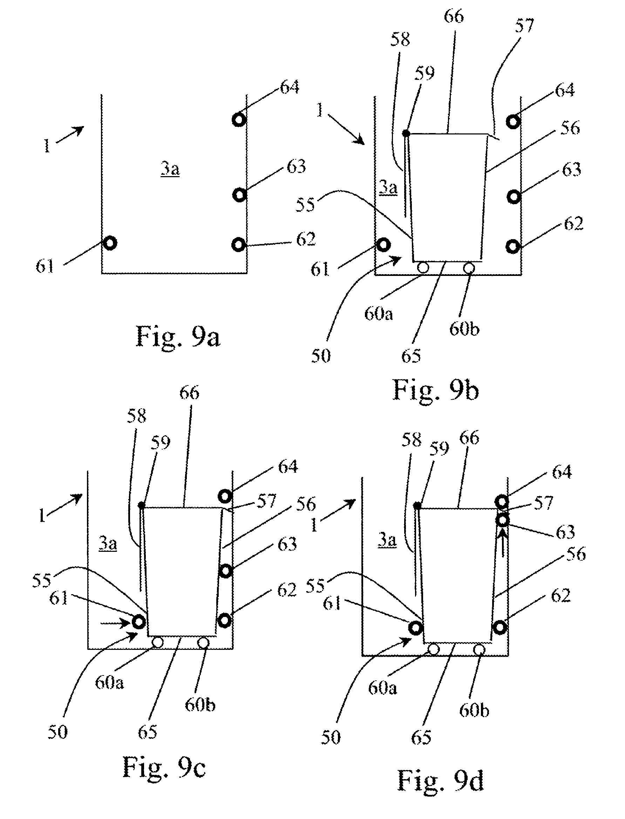

Figs. 9a to 9d show a third embodiment of a container retaining assembly according to the invention schematically illustrating how a garbage container 50 is retained in a container booth 3a according to any of the above-described embodiments.

In the following, a preferred embodiment of a method according to the third aspect of the invention will be described with reference to figs. 9a to 9d.

In fig. 9a a container retaining assembly 1 with a container booth 3a, a first movable member 61, a first backstopping member 62, a second movable member 63 and a second backstopping member 64 is shown schematically in a position ready to accommodate a garbage container 50.

The container retaining assembly 1 may furthermore comprise ports and/or lifting means and/or transporting means. The individual elements of the container retaining assembly 1 may for instance be constructed as described above in connection with one of the embodiments according to figs. 2 to 7.

Initially, at an initial position schematically illustrated by fig. 9b, a full garbage container 50, preferably weighing no more than 310 kg, is placed in the container booth 3a of the container retaining assembly 1. The position of the members 61, 62, 63 and 64 shown in fig. 9a and 9b corresponds to the position shown in the container booth denoted 3a in figs. 2, 3 and 7.

Applying the method according to the invention to the container retaining installation according to fig. 8 having several container booths 3a - 3f not all container booths 3a - 3f need necessarily be occupied as long as the container retaining installation is in balance. As can be seen from fig. 4 the garbage containers may be loaded from either side of each container booth 3a - 3f, whereas it in practice is feasible to use one side as a loading side and the other as an unloading side for unloading empty garbage containers.

In a following step the retention process is initiated by pressing a start button, e.g. on the control unit, activating the electrical system and thereby the actuator elements moving the first movable member 61 and the second movable member 63. In practice, the process is completed by holding down a safety button to activate an automatic retention process for the container booth 3a of the container retaining assembly 1 and holding the button down until retention has been achieved. By providing the actuator elements with force measuring means, achieved retention may be indicated by e.g. a lamp lighting up on the control unit when a given desired force has been obtained.

Referring to figs. 9c and 9d to achieve retention the first and second movable members 61 and 63 of the container booth 3a preferably work as follows:

Firstly, the first movable member 61 is activated such that the first actuator element pushes the first force transferring element horizontally forward into contact with the first side surface 55 of the garbage container 50 and thereby forcing the second side surface 56 into contact with the first backstopping member 62 as illustrated by the arrow in fig. 9c until a pressure of about 200 kg on the garbage container 50 is achieved. Simultaneously the force pushes the garbage container 50 towards the second movable member 63. Subsequently the pressure is reduced to about 30 kg and sustained at that level. Thereby the container is placed in a position enabling the second movable member 63 to perform its task. The position of the members 61, 62, 63 and 64 shown in fig. 9c corresponds to the position shown in the container booth denoted 3b in figs. 3 and 7.

The reduction in pressure is necessary to ensure that the garbage container 50 is not retained too firmly between first movable member 61 and first backstopping member 62 during the action of the second movable member 63. Too firm retention could impede the action of the second movable member 63 thereby compromising the retention between second movable member 63 and second backstopping member 64 and further pose a risk of the garbage container 50 being tilted within the container booth 3a or being damaged.

Secondly, the second movable member 63 is activated such that the second actuator element pushes the second force transferring element vertically upwards into contact with the engagement means 57 of the garbage container 50 and thereby forcing the engagement means 57 into contact with the second backstopping member 64 as illustrated by the arrow in fig. 9d with an increasing pressure until a pressure of about 1000 kg on the garbage container 50 is achieved and sustained. Thereby the garbage container 50 is retained between the second force transferring element of the second movable member 63 and the second backstopping member 64. The position of the members 61, 62, 63 and 64 shown in fig. 9d corresponds to the position shown in the container booth denoted 3c in figs. 3 and 7.

Thirdly, the first movable member 61 is activated such that the first actuator element increases the pressure of the first movable member 61 on the garbage container 50 from 30 kg to about 200 kg and sustains the pressure. The garbage container 50 is in this way also retained between the first force transferring element of the first movable member 61 and the first backstopping member 62, thus completing the retention.

The above-mentioned exemplary magnitudes of pressure are experimentally shown as particularly suitable when retaining a garbage container according to the EN 840-2-standard weighing no more than 310 kg. Other magnitudes of pressures than those stated in the above may of course also be used. Also, the pressures used may be adapted to the circumstances given.

The directions illustrated in figs. 9c and 9d in which the first and second movable members 61, 63 are moved may also in other embodiments be inclined with respect to the directions shown. Particularly, if the second backstopping member 64 is adapted to reach a distance below the top plane 54 into the garbage container 50 at the second side surface 56, a second force inclined towards the interior of the garbage container 50 provided by the second movable member 63 may provide retention of an edge of the second side surface 56 adjacent the engagement means 57. In such an embodiment it is possible to omit the engagement means 57.

In case of a container retaining assembly 1 comprising port(s), the port(s) of the container booth 3a are closed, if not already done. Preferably, the control unit and suitable sensors monitors that proper closure has been achieved.

In case of a container retaining assembly 1 comprising a lifting means and a transporting means, the lifting means is next activated in order to lift the container retaining assembly 1 to a position in which the tilting means or, as is the case in this example, the transporting means may be activated. In practice this is achieved by activating another safety button on the control unit, the button preferably initially activating the port closure. The lifting means, e.g. a crane device, is then activated automatically when proper closure has been achieved.

At the appropriate lifting height the transporting means take over and the container retaining assembly 1 is transported to a destination, at which the containers are to be emptied.

The functioning of the lifting means and/or transporting means may be monitored continuously during action, e.g. on a display of or by means of (warning) lamps on the control unit. Furthermore the stability, i.e. oscillations, of the container retaining assembly 1 during the lifting process may be optically monitored as described in the above in connection with fig. 5.

At the destination the tilting means is activated to tilt the container retaining assembly 1, thereby emptying the garbage container 50 accommodated in container booth 3a. Using a tilting process substantially as described above in connection with figs. 6 and 7, the container retaining assembly 1 is tilted 140° to empty the garbage container 50, then back to resume the initial position. During tilting the actual angular position of the container retaining assembly 1 being tilted may be monitored by the control unit.

Subsequently, the garbage container 50 to be emptied having been emptied where desired, the transporting means is actuated to transport the container retaining assembly 1 back to the starting position (or another unloading position), where the lifting means take over lowering the container retaining assembly 1 to the ground. The speed of the lowering process (and for that matter the above mentioned lifting) may be regulated continuously, e.g. by using an adjustable electromotor. At the starting position on the ground there may be provided means for guiding the container retaining assembly 1 into a desired position, in which the container retaining assembly 1 may optionally be locked in place.

At the starting position, the garbage container 50 is released substantially by reversing the above described retention process, or by simply first moving the second movable member 63 to its retracted position, subsequently moving the first movable member 61 to its retracted position.

Finally the ports are opened, and the empty garbage container 50 may be removed from the container retaining assembly 1.

As an extra feature the container retaining installation, or the container retaining assembly, according to the invention may comprise a means for cleaning and/or disinfecting the containers and/or container booths subsequent to emptying. Cleaning may take place in principle at any time following emptying the containers, but preferably cleaning is performed at the time when the containers are still tilted immediately subsequent to emptying. Cleaning may be performed rinsing or cleansing the containers with any suitable fluid such as e.g. water or soapy water with or without a disinfectant. With a container retaining assembly according to the invention such cleaning need only be performed on the interior of the containers, as the lid is kept clean when emptying. A cleaning feature is known *per se* from e.g. EP 0509897 A1, and is particularly desired in case of infectious garbage such as hospital garbage.

In a further aspect the container retaining assembly comprises one or more further side elements being substantially parallel with said third side element.

In a further aspect the depth of said container booth is larger than said width of said container booth.

In a further aspect the tilting means is capable of tilting said container retaining assembly between 90° and 180°, preferably between 120° and 160°, most preferred around 140°.

In a further aspect the container retaining assembly according to the invention is adapted for accommodating a garbage container in accordance with the EN 840-2-standard.

Moreover it should be noted that the above description of preferred embodiments is merely an example, and that the skilled person would know that numerous variations are possible without departing from the scope of the claims. Particularly a wide variety of uses of the invention other than garbage handling are clearly feasible, such uses including practically any situation in which containers, including containers without lids, are to be retained, possibly transported and subsequently emptied. An example of such a use is baggage handling e.g. at airports.

## Claims

1. A container retaining assembly (1; 1a; 1b) adapted to retain a garbage container (50) of the substantially box-shaped type with an upper part (51), a lower part (52), said lower part (52) comprising a bottom part defining a bottom plane (53) and said upper part (51) comprising a top part with an opening defining a top plane (54), the bottom plane (53) and the top plane (54) being substantially parallel, comprising
a container booth (3) adapted to accommodate said garbage container (50) in a use position of said container retaining assembly (1), and
at least one retaining device adapted to releaseably retain said garbage container (50) in said container booth (3),
**characterized by** further comprising
a first said retaining device with a first movable member (6, 11) and a first backstopping member (5), said first movable member (6, 11) being movable towards said first backstopping member (5) for providing a first force on said garbage container (50) in said use position, said first force retaining said lower part (52) of said garbage container (50) between said first movable member and said first backstopping member (5), and
a second said retaining device with a second movable member (8, 12) and a second backstopping member (7), said second movable member (8, 12) being movable towards said second backstopping member (7) for providing a second force on said garbage container (50) in said use position, said second force retaining a side of said upper part (51) of said garbage container (50) between said second movable member (8, 12) and said second backstopping member (7).

2. A container retaining assembly according to claim 1, wherein
said first movable member (6, 11) comprises at least one first actuator element (11) providing said first force and at least one first force-transferring element (6) adapted for transferring said first force to said lower part (52) of said garbage container (50), and wherein
said first actuator element (11) provides said first force as an upwardly inclined force, and said first force-transferring element (6) is adapted for transforming said first force to a force directed in a direction being substantially parallel with said bottom plane (53) of said garbage container (50).

3. A container retaining assembly according to claim 1 or 2, wherein said second movable member (8, 12) comprises at least one second actuator element (12) providing said second force and at least one second force-transferring element (8) adapted for transferring said second force to said side of said upper part (51) of said garbage container (50), and wherein
said second actuator element (12) provides said second force as a force directed substantially perpendicular to said bottom plane (53) of said garbage container (50), and said second force-transferring element (8) is adapted for transforming said second force to a force directed in a direction being substantially perpendicular to said bottom plane (53) of said garbage container (50).

4. A container retaining assembly according to claim 3, wherein said second force-transferring element (8) comprises a substantially square bracket-shaped main element (8b) and at least one abutment element (8a).

5. A container retaining assembly according to any one of claims 2 to 4, wherein said container booth (3) is adapted for accommodating a garbage container (50) which is loaded into said container booth (3) in a loading direction (L), wherein said container booth (3) comprises a depth (d) being parallel with said loading direction (L) and a width (w) being perpendicular to said loading direction, and wherein said first force-transferring element (6) extends in substantially the full said depth of said container booth (3).

6. A container retaining assembly according to any one of claims 3 to 5, wherein said container booth (3) is adapted for accommodating a garbage container (50) which is loaded into said container booth (3) in a loading direction (L), wherein said container booth (3) comprises a depth (d) being parallel with said loading direction (L) and a width (w) being perpendicular to said loading direction (L), and wherein said second force-transferring element (8) extends in substantially the full said depth of said container booth (3).

7. A container retaining assembly according to any one of the above claims, further comprising at least one set of container booth side elements, such as rigid bars, comprising:
a first side element (2a),
a second side element (2b) extending substantially parallel with said first side element (2a), and
a third side element (2c) rigidly connecting said first and second side elements (2a; 2b) and extending substantially perpendicular to said first and second side elements (2a; 2b), and wherein
said first movable member (6, 11) and said first backstopping member (5) are arranged on said first and second side elements (2a; 2b), respectively, and
said second movable member (8, 12) and said second backstopping member (7) are arranged on said second side element (2b),
such that said first force and said second force is provided in substantially mutually perpendicular directions.

8. A container retaining assembly according to any one of the above claims, further comprising any one or more of:
a screening plate (9a; 9b) arranged substantially vertically above said first movable member and extending substantially in parallel with said depth (d) of said container booth (3),
a tilting means (4a, 4b) adapted for tilting said container retaining assembly (1; 1a; 1b) about a tilting axis (47),
a lifting means adapted for lifting said container retaining assembly (1; 1a; 1b) in a lifting direction being substantially perpendicular to said bottom plane (53) of said garbage container (50), said lifting means preferably being arranged in connection with said tilting means (4a, 4b),
transporting means adapted for moving said container retaining assembly (1; 1a; 1b) in a transport direction being substantially parallel to said bottom plane (53) of said garbage container (50), said transporting means preferably being arranged in connection with said lifting means and/or said tilting means (4a, 4b), and
a plurality of, preferably three, container booths (3a, 3b, 3c) arranged in a side-by-side configuration.

9. A container retaining assembly according to any one of the above claims, being adapted for accommodating a garbage container (50) further comprising a first side surface (55) and an opposite, second side surface (56), said second side surface (56) comprising at an upper edge (57) engagement means, said second movable member (8, 12) being adapted for engagement with said upper edge engagement means, said garbage container (50) preferably further comprising a lid (58) hingedly connected (59) with an upper edge of said first side surface (55), such that, when said garbage container (50) is placed in said container booth (3), said lid (58) in an open position of said garbage container (50) may be arranged to be retained in a position parallel with said first side element (2a).

10. A container retaining installation comprising a plurality, preferably two, container retaining assemblies (1; 1a; 1b) according to any one of the above claims, preferably arranged in a side-by-side configuration.

11. A container retaining installation according to claim 10, wherein said lifting means is adapted to simultaneously lift said two or more container retaining assemblies (1; 1a; 1b), and wherein said tilting means are adapted to allow for separate tilting of each said container retaining assembly (1; 1a; 1b).

12. A method for retaining a garbage container comprising the steps of:
providing at least one container retaining assembly (1; 1a; 1b) according to any one of claims 1 to 9,
providing a substantially box-shaped garbage container (50) with an upper part (51), a lower part (52), said lower part (52) comprising a bottom part defining a bottom plane (53) and said upper part (51) comprising a top part with an opening defining a top plane (54), the bottom plane (53) and the top plane (54) being substantially parallel,
placing said garbage container (50) in a container booth (3),
**characterized by** further comprising the steps of:
moving the first movable member (6, 11) towards the first back-stopping member (5) thereby providing a first force on said garbage container (50), said first force retaining said lower part (52) of said garbage container (50) between said first movable member (6, 11) and said first backstopping member (5), and
moving the second movable member (8, 12) towards the second backstopping member (7) for providing a second force on said garbage container (50), said second force retaining a side of said upper part (51) of said garbage container (50) between said second movable member (8, 12) and said second backstopping member (7).

13. A method according to claim 12, wherein the step of moving said second movable member (8, 12) is performed subsequent to moving said first movable member (6, 11).

14. A method according to claim 12 or 13, wherein said garbage container (50) further comprises a first side surface (55) and an opposite, second side surface (56), said second side surface (56) comprising at an upper edge (57) engagement means, the garbage container (50) preferably further comprising a lid (58) hingedly connected (59) with an upper edge of said first side surface (55), said lid (58) in an open position of said garbage container (50) being arranged in a position parallel with said first side surface (55), and wherein said garbage container (50) is placed lid open in said container booth (3), such that said lid (57) is extending above said first movable member (6, 11).

15. A method according to any one of claims 12 to 14, further comprising one or more of the steps of:
lifting and/or tilting said container retaining assembly (1; 1a; 1b), said tilting emptying said garbage container (50), and
moving said container retaining assembly (1; 1a; 1b).

## Patentansprüche

1. Behälterhalteanordnung (1; 1a; 1b), die geeignet ist, einen Müllbehälter (50) der im Wesentlichen kastenförmigen Art mit einem oberen Teil (51), einem unteren Teil (52) zu halten, wobei der untere Teil (52) einen eine Bodenebene (53) definierenden Bodenteil umfasst und der obere Teil (51) einen Oberteil mit einer Öffnung umfasst, der eine obere Ebene (54) definiert, wobei die Bodenebene (53) und die obere Ebene (54) im Wesentlichen parallel sind, mit
einer Behälterkabine (3), die geeignet ist, den Müllbehälter (50) in einer Gebrauchsposition der Behälterhalteanordnung (1) aufzunehmen,
und
mindestens einer Haltevorrichtung, die geeignet ist, den Müllbehälter (50) freigebbar in der Behälterkabine (3) zu halten,
**dadurch gekennzeichnet, dass** sie ferner Folgendes umfasst:
eine erste Haltevorrichtung mit einem ersten beweglichen Element (6, 11) und einem ersten Rückenstoppelement (5), wobei das erste bewegliche Element (6, 11) zu dem ersten Rückenstoppelement (5) hin beweglich ist, um eine erste Kraft auf den Müllbehälter (50) in der Gebrauchsposition bereitzustellen, wobei die erste Kraft den unteren Teil (52) des Müllbehälters (50) zwischen dem ersten beweglichen Element und dem ersten Rückenstoppelement (5) hält, und
eine zweite Haltevorrichtung mit einem zweiten beweglichen Element (8, 12) und einem zweiten Rückenstoppelement (7), wobei das zweite bewegliche Element (8, 12) zu dem zweiten Rückenstoppelement (7) hin beweglich ist, um eine zweite Kraft auf den Müllbehälter (50) in der Gebrauchsposition bereitzustellen, wobei die zweite Kraft eine Seite des oberen Teils (51) des Müllbehälters (50) zwischen dem zweiten beweglichen Element (8, 12) und dem zweiten Rückenstoppelement (7) hält.

2. Behälterhalteanordnung nach Anspruch 1, wobei das erste bewegliche Element (6, 11) mindestens ein erstes Stellgliedelement (11), das die erste Kraft bereitstellt, und mindestens ein erstes Kraftübertragungselement (6) umfasst, das geeignet ist, die erste Kraft auf den unteren Teil (52) des Müllbehälters (50) zu übertragen, und wobei das erste Stellgliedelement (11) die erste Kraft als eine nach oben geneigte Kraft bereitstellt und das erste Kraftübertragungselement (6) geeignet ist, die erste Kraft in eine Kraft umzuwandeln, die in eine Richtung gerichtet ist, die im Wesentlichen parallel zu der Bodenebene (53) des Müllbehälters (50) verläuft.

3. Behälterhalteanordnung nach Anspruch 1 oder 2, wobei das zweite bewegliche Element (8, 12) mindestens ein zweites Stellgliedelement (12), das die zweite Kraft bereitstellt, und mindestens ein zweites Kraftübertragungselement (8) umfasst, das geeignet ist, die zweite Kraft auf die Seite des oberen Teils (51) des Müllbehälters (50) zu übertragen, und wobei
das zweite Stellgliedelement (12) die zweite Kraft als eine im Wesentlichen senkrecht zu der Bodenebene (53) des Müllbehälters (50) gerichtete Kraft bereitstellt und das zweite Kraftübertragungselement (8) geeignet ist, die zweite Kraft in eine Kraft umzuwandeln, die in eine Richtung gerichtet ist, die im Wesentlichen senkrecht zu der Bodenebene (53) des Müllbehälters (50) verläuft.

4. Behälterhalteanordnung nach Anspruch 3, wobei das zweite Kraftübertragungselement (8) ein im Wesentlichen quadratisches klammerförmiges Hauptelement (8b) und mindestens ein Anschlagelement (8a) umfasst.

5. Behälterhalteanordnung nach einem der Ansprüche 2 bis 4, wobei die Behälterkabine (3) geeignet ist, einen Müllbehälter (50) aufzunehmen, der in einer Laderichtung (L) in die Behälterkabine (3) geladen wird, wobei die Behälterkabine (3) eine Tiefe (d), die parallel zu der Laderichtung (L) verläuft, und eine Breite (w), die senkrecht zu der Laderichtung verläuft, hat, und wobei sich das erste Kraftübertragungselement (6) im Wesentlichen in der vollen Tiefe der Behälterkabine (3) erstreckt.

6. Behälterhalteanordnung nach einem der Ansprüche 3 bis 5, wobei die Behälterkabine (3) geeignet ist, einen Müllbehälter (50) aufzunehmen, der in einer Laderichtung (L) in die Behälterkabine (3) geladen wird, wobei die Behälterkabine (3) eine Tiefe (d), die parallel zu der Laderichtung (L) verläuft, und eine Breite (w), die senkrecht zu der Laderichtung (L) verläuft, hat, und wobei sich das zweite Kraftübertragungselement (8) im Wesentlichen in der vollen Tiefe der Behälterkabine (3) erstreckt.

7. Behälterhalteanordnung nach einem der obigen Ansprüche, die ferner mindestens einen Satz Behälterkabinenseitenelemente wie starre Stäbe umfasst, mit
einem ersten Seitenelement (2a),
einem zweiten Seitenelement (2b), das sich im Wesentlichen parallel zu dem ersten Seitenelement (2a) erstreckt, und
einem dritten Seitenelement (2c), das das erste und das zweite Seitenelement (2a; 2b) starr verbindet und sich im Wesentlichen senkrecht zum ersten und zweiten Seitenelement (2a; 2b) erstreckt, und wobei
das erste bewegliche Element (6, 11) und das erste Rückenstoppelement (5) an dem ersten bzw. dem zweiten Seitenelement (2a; 2b) angeordnet sind und das zweite bewegliche Element (8, 12) und das zweite Rückenstoppelement (7) an dem zweiten Seitenelement (2b) angeordnet sind,
so dass die erste Kraft und die zweite Kraft in im Wesentlichen zueinander senkrecht verlaufenden Richtungen bereitgestellt sind.

8. Behälterhalteanordnung nach einem der obigen Ansprüche, ferner mit einem oder mehreren der Folgenden:
einer Abschirmplatte (9a; 9b), die im Wesentlichen vertikal über dem ersten beweglichen Element angeordnet ist und sich im Wesentlichen parallel zu der Tiefe (d) der Behälterkabine (3) erstreckt,
einem Kippmittel (4a, 4b), das geeignet ist, die Behälterhalteanordnung (1; 1a; 1b) um eine Kippachse (47) zu kippen,
einem Hebemittel, das geeignet ist, die Behälterhalteanordnung (1; 1a; 1b) in einer Heberichtung anzuheben, die im Wesentlichen senkrecht zu der Bodenebene (53) des Müllbehälters (50) verläuft, wobei das Hebemittel vorzugsweise in Verbindung mit dem Kippmittel (4a, 4b) angeordnet ist,
Transportmitteln, die geeignet sind, die Behälterhalteanordnung (1; 1a; 1b) in einer Transportrichtung zu bewegen, die im Wesentlichen parallel zu der Bodenebene (53) des Müllbehälters (50) verläuft, wobei die Transportmittel vorzugsweise in Verbindung mit dem Hebemittel und/oder dem Kippmittel (4a, 4b) angeordnet sind, und
mehreren, vorzugsweise drei, Behälterkabinen (3a, 3b, 3c), die nebeneinander angeordnet sind.

9. Behälterhalteanordnung nach einem der obigen Ansprüche, die geeignet ist, einen Müllbehälter (50) aufzunehmen, der ferner eine erste Seitenfläche (55) und eine gegenüberliegende zweite Seitenfläche (56) umfasst, wobei die zweite Seitenfläche (56) an einem oberen Rand (57) Eingriffsmittel umfasst, wobei das zweite bewegliche Element (8, 12) geeignet ist, die oberen Randeingriffsmittel in Eingriff zu nehmen, wobei der Müllbehälter (50) vorzugsweise ferner einen Deckel (58) umfasst, der mit einem oberen Rand der ersten Seitenfläche (55) scharniermäßig verbunden (59) ist, so dass der Deckel (58) in einer offenen Position des Müllbehälters (50) so angeordnet sein kann, wenn der Müllbehälter (50) in der Behälterkabine (3) platziert ist, dass er in einer parallel zu dem ersten Seitenelement (2a) liegenden Position gehalten werden kann.

10. Behälterhalteanlage mit mehreren, vorzugsweise zwei, Behälterhalteanordnungen (1; 1a; 1b) nach einem der obigen Ansprüche, die vorzugsweise nebeneinander angeordnet sind.

11. Behälterhalteanlage nach Anspruch 10, wobei das Hebemittel geeignet ist, die zwei oder mehr Behälterhalteanordnungen (1; 1a; 1b) gleichzeitig anzuheben und wobei die Kippmittel geeignet sind, getrenntes Kippen jeder der Behälterhalteanordnungen (1; 1a; 1b) zu gestatten.

12. Verfahren zum Halten eines Müllbehälters mit folgenden Schritten:
Bereitstellen mindestens einer Behälterhalteanordnung (1; 1a; 1b) nach einem der Ansprüche 1 bis 9, Bereitstellen eines im Wesentlichen kastenförmigen Müllbehälters (50) mit einem oberen Teil (51) und einem unteren Teil (52), wobei der untere Teil (52) einen eine Bodenebene (53) definierenden Bodenteil umfasst und der obere Teil (51) einen Oberteil mit einer Öffnung umfasst, der eine obere Ebene (54) definiert, wobei die Bodenebene (53) und die obere Ebene (54) im Wesentlichen parallel sind,
Platzieren des Müllbehälters (50) in eine Behälterkabine (3),
**dadurch gekennzeichnet, dass** es ferner die folgenden Schritte umfasst:
Bewegen des ersten beweglichen Glieds (6, 11) zu dem ersten Rückenstoppelement (5) hin, wodurch eine erste Kraft auf den Müllbehälter (50) bereitgestellt wird, wobei die erste Kraft den unteren Teil (52) des Müllbehälters (50) zwischen dem ersten beweglichen Element (6, 11) und dem ersten Rückenstoppelement (5) hält, und
Bewegen des zweiten beweglichen Glieds (8, 12) zu dem zweiten Rückenstoppelement (7) hin, um eine zweite Kraft auf den Müllbehälter (50) bereitzustellen, wobei die zweite Kraft eine Seite des oberen Teils (51) des Müllbehälters (50) zwischen dem zweiten beweglichen Element (8, 12) und dem zweiten Rückenstoppelement (7) hält.

13. Verfahren nach Anspruch 12, wobei der Schritt des Bewegens des zweiten beweglichen Glieds (8, 12) nach dem Bewegen des ersten beweglichen Glieds (6, 11) durchgeführt wird.

14. Verfahren nach Anspruch 12 oder 13, wobei der Müllbehälter (50) ferner eine erste Seitenfläche (55) und eine gegenüberliegende zweite Seitenfläche (56) umfasst, wobei die zweite Seitenfläche (56) an einem oberen Rand (57) Eingriffsmittel umfasst, wobei der Müllbehälter (50) vorzugsweise ferner einen Deckel (58) umfasst, der mit einem oberen Rand der ersten Seitenfläche (55) scharniermäßig verbunden (59) ist, wobei der Deckel (58) in einer offenen Position des Müllbehälters (50) in einer parallel zu der ersten Seitenfläche (55) liegenden Position angeordnet ist, und wobei der Müllbehälter (50) mit offenem Deckel in der Behälterkabine (3) platziert wird, so dass sich der Deckel (58) über dem ersten beweglichen Element (6, 11) erstreckt.

15. Verfahren nach einem der Ansprüche 12 bis 14, ferner mit einem oder mehreren der folgenden Schritte:
Anheben und/oder Kippen der Behälterhalteanordnung (1; 1a; 1b), wobei der Müllbehälter (50) durch das Kippen geleert wird, und
Bewegen der Behälterhalteanordnung (1; 1a; 1b).

## Revendications

1. Ensemble de maintien de récipient (1 ; 1a ; 1b) conçu pour maintenir un récipient à ordures (50) de type substantiellement en forme de caisse comportant une partie supérieure (51), une partie inférieure (52), ladite partie inférieure (52) comprenant une partie de fond définissant un plan inférieur (53) et ladite partie supérieure (51) comprenant une partie haute pourvue d'une ouverture définissant un plan supérieur (54), le plan inférieur (53) et le plan supérieur (54) étant substantiellement parallèles, comprenant
un compartiment à récipient (3) conçu pour recevoir ledit récipient à ordures (50) dans une position d'utilisation dudit ensemble de maintien de récipient (1), et
au moins un dispositif de maintien conçu pour maintenir de manière libérable ledit récipient à ordures (50) dans ledit compartiment à récipient (3),
**caractérisé en ce qu'**il comprend en outre un premier dit dispositif de maintien pourvu d'un premier organe déplaçable (6, 11) et d'un premier organe de butée (5), ledit premier organe déplaçable (6, 11) étant déplaçable en direction dudit premier organe de butée (5) pour produire une première force sur ledit récipient à ordures (50) dans ladite position d'utilisation, ladite première force maintenant ladite partie inférieure (52) dudit récipient à ordures (50) entre ledit premier organe déplaçable et ledit premier organe de butée (5), et
un deuxième dit dispositif de maintien pourvu d'un deuxième organe déplaçable (8, 12) et d'un deuxième organe de butée (7), ledit deuxième organe déplaçable (8, 12) étant déplaçable en direction dudit deuxième organe de butée (7) pour produire une deuxième force sur ledit récipient à ordures (50) dans ladite position d'utilisation, ladite deuxième force maintenant un côté de ladite partie supérieure (51) dudit récipient à ordures (50) entre ledit deuxième organe déplaçable (8, 12) et ledit deuxième organe de butée (7).

2. Ensemble de maintien de récipient selon la revendication 1, dans lequel
ledit premier organe déplaçable (6, 11) comprend au moins un premier élément actionneur (11) produisant ladite première force et au moins un premier élément de transmission de force (6) conçu pour transmettre ladite première force à ladite partie inférieure (52) dudit récipient à ordures (50), et dans lequel
ledit premier élément actionneur (11) produit ladite première force en tant que force inclinée vers le haut, et ledit premier élément de transmission de force (6) est conçu pour transformer ladite première force en une force dirigée dans une direction substantiellement parallèle audit plan inférieur (53) dudit récipient à ordures (50).

3. Ensemble de maintien de récipient selon la revendication 1 ou 2,
dans lequel ledit deuxième organe déplaçable (8, 12) comprend au moins un deuxième élément actionneur (12) produisant ladite deuxième force et au moins un deuxième élément de transmission de force (8) conçu pour transmettre ladite deuxième force audit côté de ladite partie supérieure (51) dudit récipient à ordures (50), et dans lequel ledit deuxième élément actionneur (12) produit ladite deuxième force en tant que force dirigée substantiellement perpendiculairement audit plan inférieur (53) dudit récipient à ordures (50), et ledit deuxième élément de transmission de force (8) est conçu pour transformer ladite deuxième force en une force dirigée dans une direction substantiellement perpendiculaire audit plan inférieur (53) dudit récipient à ordures (50).

4. Ensemble de maintien de récipient selon la revendication 3, dans lequel ledit deuxième élément de transmission de force (8) comprend un élément principal (8b) en forme d'équerre substantiellement droite et au moins un élément d'appui (8a).

5. Ensemble de maintien de récipient selon l'une quelconque des revendications 2 à 4, dans lequel ledit compartiment à récipient (3) est conçu pour recevoir un récipient à ordures (50) qui est chargé à l'intérieur dudit compartiment à récipient (3) dans une direction de chargement (L), dans lequel ledit compartiment à récipient (3) présente une profondeur (d) parallèle à ladite direction de chargement (L) et une largeur (w) perpendiculaire à ladite direction de chargement, et dans lequel ledit premier élément de transmission de force (6) s'étend substantiellement sur toute ladite profondeur dudit compartiment à récipient (3).

6. Ensemble de maintien de récipient selon l'une quelconque des revendications 3 à 5, dans lequel ledit compartiment à récipient (3) est conçu pour recevoir un récipient à ordures (50) qui est chargé à l'intérieur dudit compartiment à récipient (3) dans une direction de chargement (L), dans lequel ledit compartiment à récipient (3) présente une profondeur (d) parallèle à ladite direction de chargement (L) et une largeur (w) perpendiculaire à ladite direction de chargement (L), et dans lequel ledit deuxième élément de transmission de force (8) s'étend substantiellement sur toute ladite profondeur dudit compartiment à récipient (3).

7. Ensemble de maintien de récipient selon l'une quelconque des revendications ci-dessus, comprenant en outre au moins un ensemble d'éléments latéraux de compartiment à récipient, tels que des barres rigides, comprenant :
un premier élément latéral (2a),
un deuxième élément latéral (2b) s'étendant substantiellement parallèlement audit premier élément latéral (2a), et
un troisième élément latéral (2c) reliant de manière rigide lesdits premier et deuxième éléments latéraux (2a ; 2b) et s'étendant substantiellement perpendiculairement auxdits premier et deuxième éléments latéraux (2a ; 2b), et dans lequel
ledit premier organe déplaçable (6, 11) et ledit premier organe de butée (5) sont agencés sur lesdits premier et deuxième éléments latéraux (2a ; 2b), respectivement, et
ledit deuxième organe déplaçable (8, 12) et ledit deuxième organe de butée (7) sont agencés sur ledit deuxième élément latéral (2b),
de telle sorte que ladite première force et ladite deuxième force soient produites dans des directions substantiellement mutuellement perpendiculaires.

8. Ensemble de maintien de récipient selon l'une quelconque des revendications ci-dessus, comprenant en outre l'un quelconque ou plusieurs parmi :
une plaque formant écran (9a ; 9b) agencée substantiellement verticalement au-dessus dudit premier organe déplaçable et s'étendant substantiellement parallèlement à ladite profondeur (d) dudit compartiment à récipient (3),
un moyen de basculement (4a, 4b) conçu pour basculer ledit ensemble de maintien de récipient (1 ; 1a ; 1b) autour d'un axe de basculement (47), un moyen de levage conçu pour soulever ledit ensemble de maintien de récipient (1 ; 1a ; 1b) dans une direction de levage substantiellement perpendiculaire audit plan inférieur (53) dudit récipient à ordures (50), ledit moyen de levage étant agencé de préférence en liaison avec ledit moyen de basculement (4a, 4b),
des moyens de transport conçus pour déplacer ledit ensemble de maintien de récipient (1 ; 1a ; 1b) dans une direction de transport substantiellement parallèle audit plan inférieur (53) dudit récipient à ordures (50), lesdits moyens de transport étant de préférence agencés en liaison avec ledit moyen de levage et/ou ledit moyen de basculement (4a, 4b), et
une pluralité de compartiments à récipient (3a, 3b, 3c), de préférence trois compartiments à récipient, agencés en une configuration juxtaposée.

9. Ensemble de maintien de récipient selon l'une quelconque des revendications ci-dessus, conçu pour recevoir un récipient à ordures (50) comprenant en outre une première surface latérale (55) et une deuxième surface latérale opposée (56), ladite deuxième surface latérale (56) comprenant des moyens d'engagement à un bord supérieur (57), ledit deuxième organe déplaçable (8, 12) étant conçu pour s'engager avec ledit moyen d'engagement de bord supérieur, ledit récipient à ordures (50) comprenant en outre de préférence un couvercle (58) relié de manière articulée (59) à un bord supérieur de ladite première surface latérale (55), de telle sorte que, lorsque ledit récipient à ordures (50) est placé dans ledit compartiment à récipient (3), ledit couvercle (58) dans une position ouverte dudit récipient à ordures (50) peut être agencé pour être maintenu dans une position parallèle audit premier élément latéral (2a).

10. Installation de maintien de récipient comprenant une pluralité d'ensembles de maintien de récipient (1 ; 1a ; 1b), de préférence deux ensembles de maintien de récipient, selon l'une quelconque des revendications ci-dessus, de préférence agencés en une configuration juxtaposée.

11. Installation de maintien de récipient selon la revendication 10, dans laquelle ledit moyen de levage est conçu pour soulever simultanément lesdits deux ou plus de deux ensembles de maintien de récipient (1 ; 1a ; 1b), et dans laquelle lesdits moyens de basculement sont conçus pour permettre de basculer séparément chaque dit ensemble de maintien de récipient (1 ; 1a ; 1b).

12. Procédé de maintien d'un récipient à ordures comprenant les étapes de :
fourniture d'au moins un ensemble de maintien de récipient (1 ; 1a ; 1b) selon l'une quelconque des revendications 1 à 9,
fourniture d'un récipient à ordures (50) substantiellement en forme de caisse comportant une partie supérieure (51), une partie inférieure (52), ladite partie inférieure (52) comprenant une partie de fond définissant un plan inférieur (53) et ladite partie supérieure (51) comprenant une partie haute pourvue d'une ouverture définissant un plan supérieur (54), le plan inférieur (53) et
le plan supérieur (54) étant substantiellement parallèles,
placement dudit récipient à ordures (50) dans un compartiment à récipient (3),
**caractérisé en ce qu'**il comprend en outre les étapes de :
déplacement du premier organe déplaçable (6, 11) en direction du premier organe de butée (5), ce qui permet de produire une première force sur ledit récipient à ordures (50), ladite première force maintenant ladite partie inférieure (52) dudit récipient à ordures (50) entre ledit premier organe déplaçable (6, 11) et ledit premier organe de butée (5), et
déplacement du deuxième organe déplaçable (8, 12) en direction du deuxième organe de butée (7), ce qui permet de produire une deuxième force sur ledit récipient à ordures (50), ladite deuxième force maintenant un côté de ladite partie supérieure (51) dudit récipient à ordures (50) entre ledit deuxième organe déplaçable (8, 12) et ledit deuxième organe de butée (7).

13. Procédé selon la revendication 12, dans lequel l'étape de déplacement dudit deuxième organe déplaçable (8, 12) est effectuée après le déplacement dudit premier organe déplaçable (6, 11).

14. Procédé selon la revendication 12 ou 13, dans lequel ledit récipient à ordures (50) comprend en outre une première surface latérale (55) et une deuxième surface latérale opposée (56), ladite deuxième surface latérale (56) comprenant des moyens d'engagement à un bord supérieur (57), le récipient à ordures (50) comprenant en outre de préférence un couvercle (58) relié de manière articulée (59) à un bord supérieur de ladite première surface latérale (55), ledit couvercle (58) dans une position ouverte dudit récipient à ordures (50) étant agencé dans une position parallèle à ladite première surface latérale (55), et dans lequel ledit récipient à ordures (50) est placé, avec son couvercle ouvert, dans ledit compartiment à récipient (3), de telle sorte que ledit couvercle (58) s'étende au-dessus dudit premier organe déplaçable (6, 11).

15. Procédé selon l'une quelconque des revendications 12 à 14, comprenant en outre une ou plusieurs des étapes de :
levage et/ou basculement dudit ensemble de maintien de récipient (1 ; 1a ; 1b), ledit basculement vidant ledit récipient à ordures (50), et
déplacement dudit ensemble de maintien de récipient (1 ; 1a ; 1b).
